# EUROPEAN PATENT SPECIFICATION

(11) **EP 0 349 019 B1**
(45) Date of publication and mention of the grant of the patent: **07.01.1993**
(21) Application number: 89116720.7
(22) Date of filing: 27.06.1986
(51) Int. Cl.: A01J 5/08, A01J 7/00, A01K 13/00, A01K 1/12

(54) **An implement for milking animals**
Gerät zum Melken von Tieren
Dispositif de traite d'animaux

(30) Priority: 01.07.1985 NL 8501884
(43) Date of publication of application: 03.01.1990
(62) Divisional of application: 86201137.6
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 091 892
- GB-A- 2 007 486
- US-A- 4 010 714
- LANDTECHNIK. vol. 35, no. 5, May 1980, HANNOVER DE pages 222 - 224; D.ORDOLFF: "Melkzeuge automatisch ansetzen - demnächst Wirklichkeit ?"

## Description

The invention concerns an implement for milking animals, such as cows, comprising a milking parlour and a milking machine with a milking cluster having several teat cups, the milking cluster being supported by a support, whereby an observing means mounted on the support is provided for observing the position of the teats of the animal's udder, the implement being further provided with means for adjusting the position of the teat cups on the basis of the observed position of the teats.

Such an implement is described in EP-A-0 091 892. In order to prevent damage and/or contamination of the milking cluster when the animal enters the milking parlour and is positioned therein, which may be the case in the implement described in said European patent application, according to the invention the support is mounted slidably along a guide rod, said guide rod, in operative condition, being in a substantially vertical position reaching above the milking parlour floor and, in operative condition, said guide rod, together with the support supporting the milking cluster and the observing means, being an optical one, being in a substantially horizontal position below the milking parlour floor.

In US-A-4 010 714 an implement for milking animals is described, in which the milking cluster in its rest position is located under the milking parlour floor. However, not any optical observing means for observing the position of the teats is provided, as a consequence of which the attachment of the teat cups will not always be performed at a reliable and efficient manner.

In GB-A-2 007 486 an implement for milking animals is described, in which the teat cups are separately brought under an animal's udder in a position adjusted by an optical means which is mounted at the end of a robot arm carrying a respective teat cup. This implement cannot be used in a milking machine having several teat cups mounted on a milking cluster, which teat cups have to be connected to the teats more or less simultaneously.

In the implement according to the invention, it is not required that the position of the animal's teats is known beforehand and is stored e.g. in the memory of a computer, but the adaptation to the position of the relevant animal's teats is effected dependent on the real position at the moment when the animal is present in the milking parlour. The image of the udder registered by the optical means, preferably an electronic camera, may be scanned electronically in a known manner, on the basis of which the position of the teats can be translated to a desired adjustment of the teat cups. As an optical observing means is used it may be useful to provide the teats, or parts thereof, with a permanent colour.

In accordance with a further characteristic of the invention, the guide rod, together with the support supporting the milking cluster and the observing means, is pivotable about a substantially horizontal shaft from its vertical position to its horizontal position. The guide rod can be connected to a pivotable flap forming a protection for the milking cluster and the observing means from the animal's hindlegs.

For a better understanding of the invention and to show how the same may be carried into effect, reference will now be made, by way of example, to the accompanying drawings, in which:
Figure 1 is a view of an animal in the milking parlour, the milking machine being connected,
Figure 2 is a schematic cross-section of a milking unit on the line II - II in Figure 4,
Figure 3 is a schematic view of a connected milking machine,
Figure 4 is a cross-section on the line IV - IV in Figure 3,
Figure 5 is a schematic rear view of the implement, and
Figures 6 to 9 are schematic views of the various positions of the milking machine.

In the various drawings, corresponding parts have been indicated by the same reference numerals.

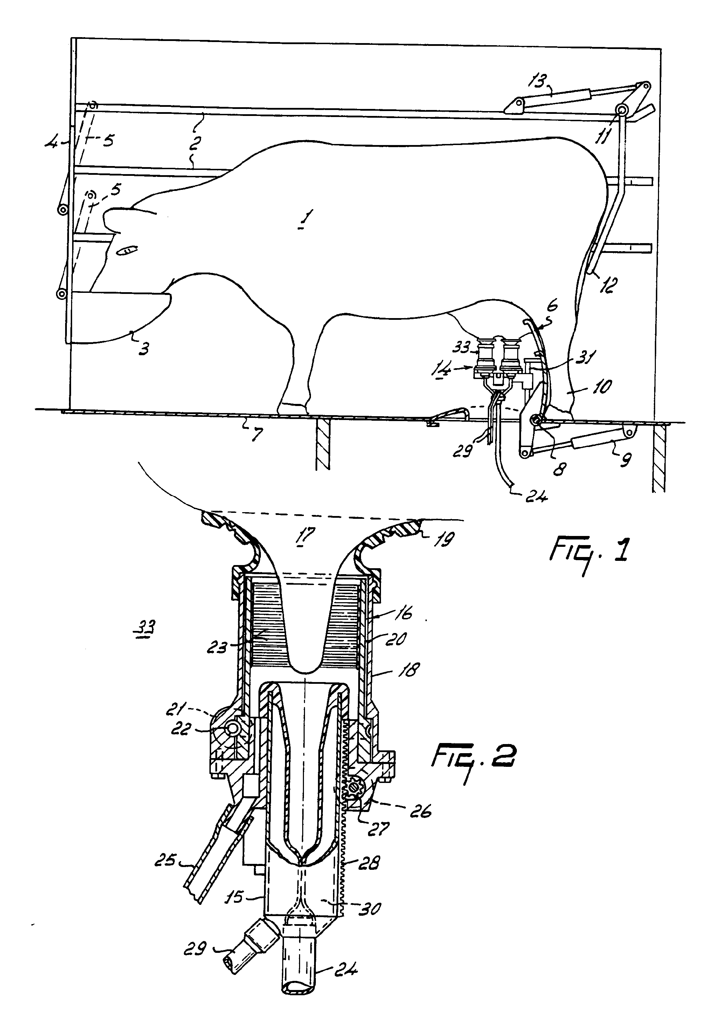

Figure 1 shows an animal 1, in this case a cow, located in a milking parlour. The animal 1 is located between lateral partitions constituted by a tubular frame 2 and is allowed to eat from a manger attached to an exit door 4. The exit door 4 is adapted to swivel upwardly by means of swivel arms 5 when the animal leaves the milking parlour. A pivotable flap 6, which is adapted to pivot about a pivot shaft 8 arranged at the level of the milking parlour floor 7, is shown in upwardly directed position. The pivoting movement of flap 6 about pivot shaft 8 is effected by means of a hydraulic or pneumatic cylinder unit 9. The pivot shaft 8 is situated exactly in front of the cow's hindlegs 10. By means of a bracket 12 pivotable about a pivot shaft 11 the cow is kept in the position in which the hindlegs stand near the pivot shaft 8, at least the cow being prevented from moving rearwardly. The bracket 12 is pivoted by means of a hydraulic or pneumatic cylinder unit 13.

The milking machine 14, which is mounted slidably on flap 6, is shown in Figure 1 in the position connected to the udder. As is apparent from the Figure, the flap 6 constitutes a protection of the milking machine against damage or contamination from the rear side, that is to say the side where the hindlegs 10 of the animal are situated.

Figure 2 schematically shows a milking unit 33 including a teat cup 15 and a cleaning device 16 which is connected to the schematically shown teat 17 of an animal. The unit shown comprises a stationary part 18 to which is arranged a flexible, funnel-shaped part 19, which constitutes the catching device for the teat 17. The funnel-shaped part 19 also constitutes a cover against the animal's udder. Inside the stationary part 18 there is located an annular part, in this case a tubular part 20, which is adapted to rotate about its longitudinal axis therein and which is driven by a schematically shown electric motor 21, e.g. by means of a worm wheel 22. At its inside, the tubular part 20 comprises hairs 23 constituting an inwardly directed brush. As a result of the rotation of the tubular part 20, the hairs 23 move over the teat, thus cleaning and massaging same. During cleaning, water or other liquid can be supplied through the milk tube 24 and be discharged through line 25. It is also possible to supply through tube 24 heated or non-heated air in order to dry the teat 17 and, if necessary, parts of the milking machine.

The stationary part 18 also comprises an electric motor 26 which includes a pinion 27 co-operating with a rack 28 connected to the teat cup 15. By means of the electric motor 26 it is possible to move the teat cup 15 in the vertical direction towards the teat 17 in order to allow of the milking operation.

The milking unit 33 comprises a milk tube 24 which, during milking, discharges the milk. Furthermore, there is present a pulsating tube 29, through which in otherwise known manner an alternating pressure can be effected in the teat holder 30.

By means of a support arranged at the stationary part 18, the implement shown in Figure 2 can be brought into a position under the teat 17, after which it is connected thereto by means of an upwardly directed movement. In order to clean the teat 17, the tubular part 20 is subsequently rotated for some time, during which cleaning liquid is supplied through milk tube 24 and discharged through cleaning tube 25. After a predetermined period of time, the supply of cleaning liquid is stopped and pre-heated air is supplied through the milk tube 24 and, after a sufficient drying has been effected, the teat cup 15 is raised and the milking operation can be started.

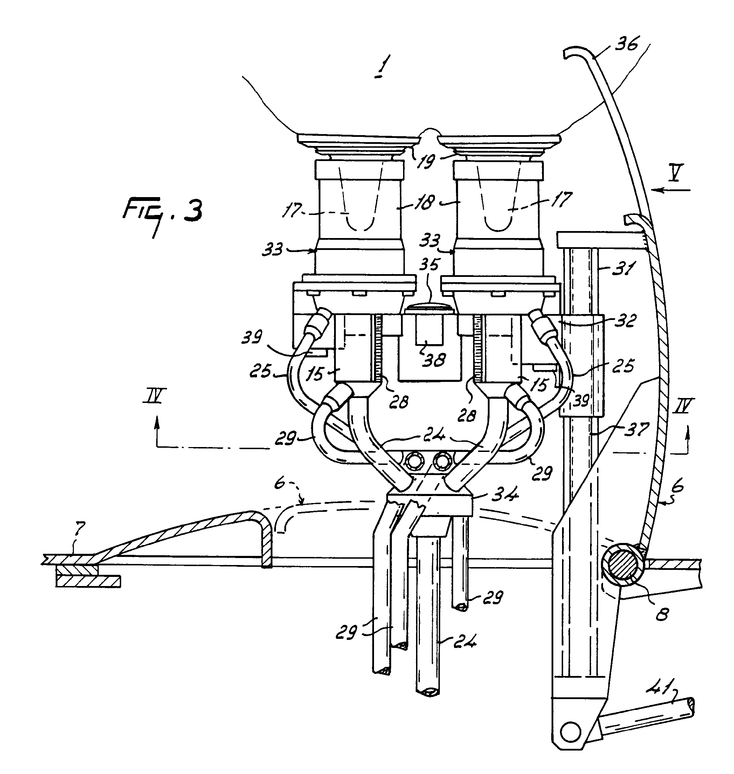

Figure 3 is a side view showing two milking units according to Figure 2. Figure 3 corresponds to part of Figure 1. In Figure 3 is shown part of the milking parlour floor 7, the flap being pivoted about pivot shaft 8 in a substantially vertical position. To the flap 6 is mounted a guide rod 31, along which a support 32 is slidable by means of an, otherwise not shown, electric motor or in any other way, such as hydraulically or pneumatically. The support 32 is connected with the stationary part 18 of the two milking units 33 shown. The various conduits of the milking units are joined in the milking claw 34 and subsequently extend to an other part of the milking machine.

The support 32 furthermore comprises an electronic camera 35 for observing the teats, on account of which observation the milking units 33 are brought into a position relative to the support 32 suitable with regard to the animal. In addition, the support comprises a sensor 38, e.g. an ultrasonic transmitter and receiver, by means of which the distance to the udder can be determined and by means of which the height of the implement can be adjusted.

It will be obvious that in Figure 3 the milking units 33 are shown in the cleaning position, that is to say that the teat cup 15 is situated in the downwardly pushed position relative to the stationary part 18.

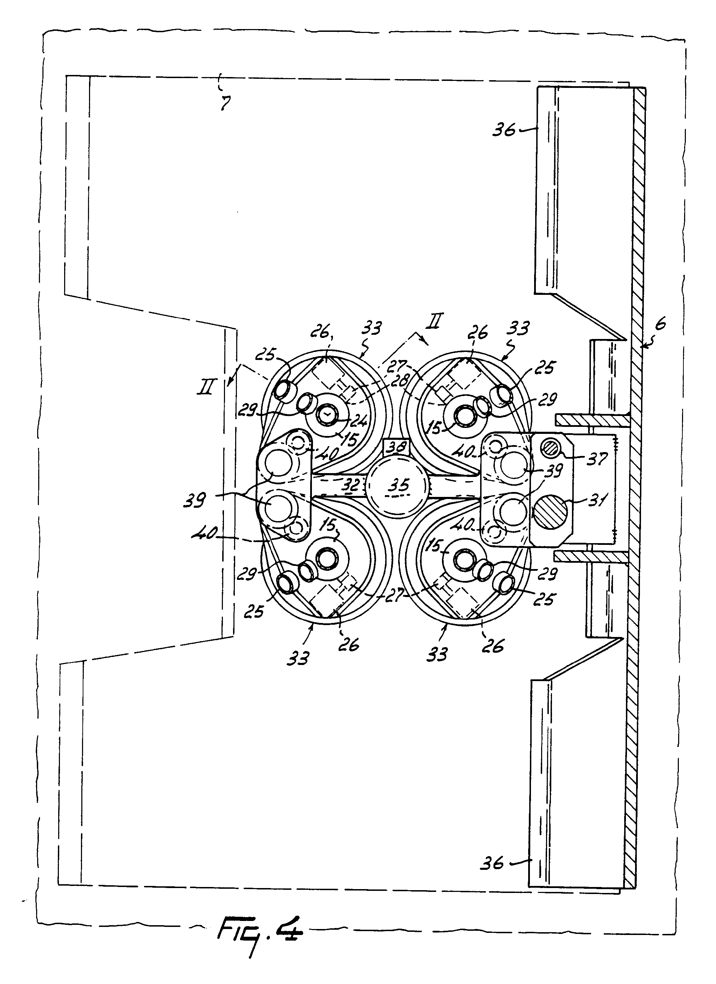

Figure 4 is a schematic bottom view of the implement shown in Figure 3, the cross-section shown in Figure 2 being indicated by the arrows II - II. Figure 4 shows the flap 6, it being indicated that the two side portions 36 extend higher than the central portion thereof, so that, during pivoting of the flap 6 about the pivot shaft 8, the animal's udder is not touched. To the flap 6 is mounted the guide rod 31 and furthermore there is shown the screw spindle 37, by means of which the support 32 can be adjusted in height. On the support is shown the electronic camera 35 and the ultrasonic sensor 38.

The four milking units 33 shown are each pivotably mounted about a shaft 39 on a support 32 The angular rotation of each milking unit relative to the pivot shaft 39 can be adjusted by means of schematically shown electric motors 40, so that each milking unit can be fixed in a position suitable for the relevant animal.

In addition, in Figure 4 there are shown electric motors 26 which by means of pinions 27 and racks 28 can slide the teat cups 15 in height relative to the cleaning device. Also, with each of the four milking units there are shown the various tubes, i.e. the milk tube 24 for supplying cleaning liquid and air and for discharging milk, the cleaning tube 25 for discharging cleaning liquid, and the pulsating tube 29 for supplying an alternating pressure to the teat holder.

By means of dash lines is indicated schematically the opening in the milking parlour floor 7, which opening has a shape which substantially corresponds to that of the flap 6.

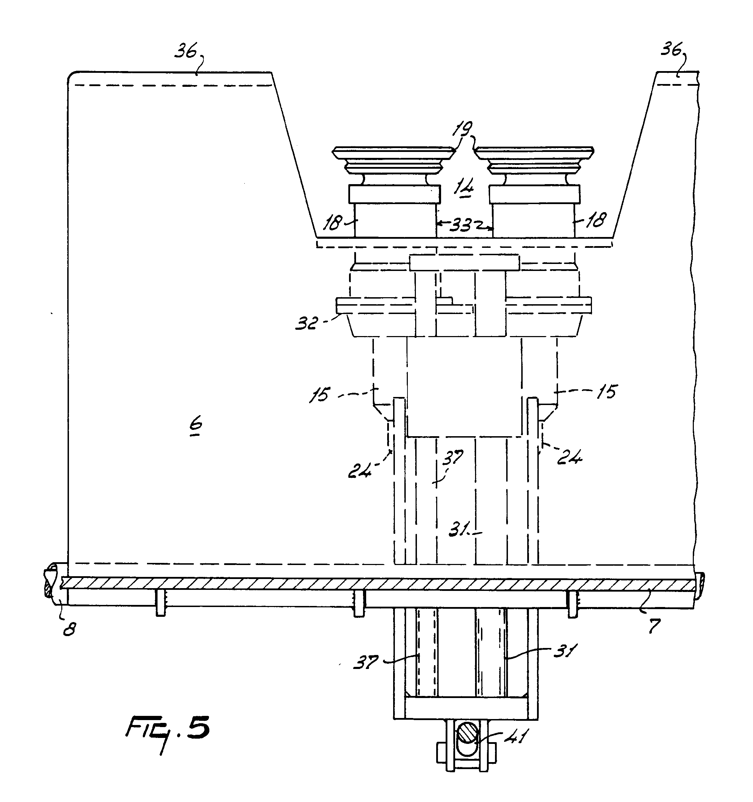

Figure 5 schematically shows a view corresponding to arrow V in Figure 3, from the rear towards the flap 6, in which view the higher extending side portions 36 have been clearly indicated. Behind the flap 6 there is situated the part of the milking machine to be connected to the animal's udder, two milking units 33 being visible, each of which having the flexible, funnel-shaped catching device 19. The two milking units 33 are connected with the support 32 indicated by dash lines, which support is connected slideably in height with the flap 6, as has been described previously. The flap 6 is pivotable about the shaft 8, for which purpose there is present a hydraulic cylinder, the piston rod 41 of which is indicated at the bottom in Figure 5.

Figures 6, 7, 8 and 9 show the various stages of the procedure to be performed by means of the implement for milking according to the invention.

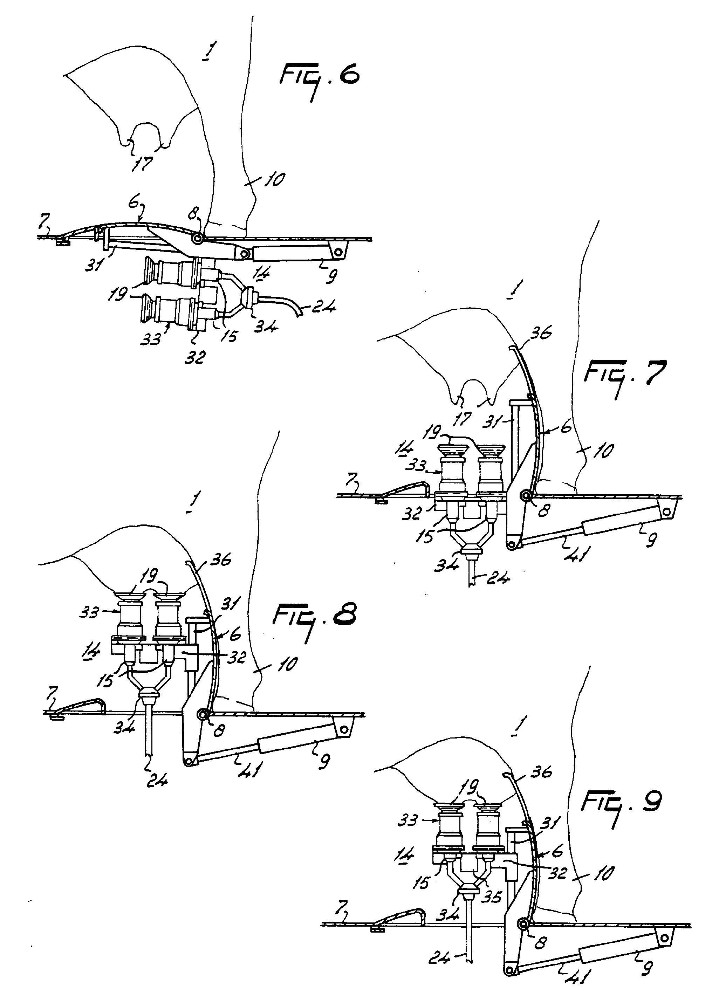

Figure 6 shows part of the milking parlour floor 7, the flap 6 being pivoted downwardly and thus constituting part thereof. After the animal, in this case a cow, has entered the milking parlour, her hindlegs will be situated near the pivot point 8 of the flap 6. If the hindlegs 10 are situated too far forwardly, they will be moved to the rear when the flap 6 is brought in the vertical position, as is shown in Figure 7. If the hindlegs 10 are situated too far rearwardly, the animal will be pushed forwardly by means of the bracket 12 shown in Figure 1 until the correct position of the hindlegs is attained. To that end there may be present in the milking parlour floor 7 sensors for detecting the position of the hindlegs 10.

As is apparent from Figure 6, the part of the milking machine to be connected to the animal's udder is located in its inoperative position under the floor, so that on the one hand no space is occupied thereby in the milking parlour or stable, while on the other by the accommodation thereof in a separate room the necessary hygiene can be maintained.

Once the animal has entered the milking parlour, the flap 6 is brought in the upward position by means of the hydraulic cylinder 9, as a result of which an opening is created in the milking parlour floor, through which opening the part 14 of the milking machine to be connected to the animal's udder can be moved upwardly (Figure 7).

After the various milking units 33, in a manner as described previously, have been brought into the position relative to the support 32 suitable with regard to the relevant animal, said support 32 is moved further upwardly along the guide rod 31 until the teats 17 of the udder are enveloped and the funnel-shaped part 19 is contiguous to the udder. The teat cups 15 are then still in the downward position, as also indicated in Figure 2, so that the cleaning device may clean, disinfect, dry and/or massage the animal's teats, in so far as this is desired. This situation is shown in Figure 8.

In a manner as described previously, the teat cups 15 are subsequently moved upwardly, so that the milking operation can be started, which is shown in Figure 9.

After the milking operation has been completed, which can be detected e.g. by means of a fluid flow meter arranged somewhere in the milk tube, the support is moved downwardly again along the guide rod 31, so that, by means of the hydraulic cylinder 9, the flap 6 can be pivoted to the substantially horizontal position, after which the animal can leave the milking parlour.

The control of the implement may be effected by means of a computer, while hydraulic, pneumatic or electric means may be provided for moving the various parts thereof. The metering of fodder during milking may also be controlled by a computer, for which purpose the animals may be provided with an identification system, e.g. a transmitter on a collar, so that the metering of fodder may be adapted to the conditions of the relevant animal. In addition, a registration may be conducted of the number of times that and the moments when the animal visits the milking parlour, the temperature and other data relating to the milk, etc.

The embodiment shown should be considered as such and only serves as an explanation of the invention which should not be considered as being restricted to this embodiment.

## Claims

1. An implement for milking animals, such as cows, comprising a milking parlour and a milking machine (14) with a milking cluster having several teat cups (15), the milking cluster being supported by a support (32), whereby an observing means (35) mounted on the support (32) is provided for observing the position of the teats (17) of the animal's udder, the implement further being provided with means for adjusting the position of the teat cups (15) on the basis of the observed position of the teats (17), characterized in that the observing means (35) is an optical one, and in that the support (32) is mounted slidably along a guide rod (31), said guide rod (31), in operative condition, being in a substantially vertical position reaching above the milking parlour floor (7) and, in inoperative condition, said guide rod (31), together with the support (32) supporting the milking cluster and the observing means (35), being in a substantially horizontal position below the milking parlour floor (7).

2. An implement as claimed in claim 1, characterized in that the guide rod (31), together with the support (32) supporting the milking cluster and the observing means (35), is pivotable about a substantially horizontal shaft (8) from its vertical position to its horizontal position.

3. An implement as claimed in claim 2, characterized in that the guide rod (31) is connected to a pivotable flap (6) forming a protection for the milking cluster and the observing means (35) from the animal's hindlegs.

## Patentansprüche

1. Gerät zum Melken von Tieren, wie z. B. Kühen, bestehend aus einem Melkstand und einer Melkmaschine (14) mit einem Melkgeschirr, das mit mehreren Zitzenbechern (15) versehen und durch einen Träger (32) abgestützt ist, wobei eine auf dem Träger (32) befestigte Uberwachungseinrichtung (35) vorgesehen ist, mittels derer die Position der Zitzen (17) des Tiereuters überwacht wird, und wobei das Gerät weiterhin mit einer Einrichtung zum Einstellen der Position der Zitzenbecher (15) auf der Basis der beobachteten Position der Zitzen (17) versehen ist, dadurch gekennzeichnet, daß es sich um eine optische Überwachungseinrichtung (35) handelt, und daß der Träger (32) verschiebbar auf einem Führungsstab (31) angeordnet ist, wobei sich der Führungsstab (31) im Betrieb in einer im wesentlichen vertikalen Lage oberhalb des Melkstandbodens (7) erstreckt, während sich der Führungsstab (31) außerhalb des Betriebs zusammen mit dem Träger (32), der das Melkgeschirr und die Überwachungseinrichtung (35) abstützt, in einer im wesentlichen horizontalen Lage unterhalb des Melkstandbodens (7) erstreckt.

2. Gerät nach Anspruch 1, dadurch gekennzeichnet, daß der Führungsstab (31) zusammen mit dem Träger (32), der das Melkgeschirr und die Überwachungseinrichtung (35) abstützt, um eine im wesentlichen horizontale Achse (8) aus seiner vertikalen Position in seine horizontale Position geschwenkt werden kann.

3. Gerät nach Anspruch 2, dadurch gekennzeichnet, daß der Führungsstab (31) mit einer schwenkbaren Klappe (6) verbunden ist, welche das Melkgeschirr und die Überwachungseinrichtung (35) gegen die Hinterbeine des Tieres abschirmt.

## Revendications

1. Dispositif pour traire des animaux, tels que des vaches, comprenant une stalle de traite et une machine à traire (14) avec un faisceau trayeur ayant plusieurs gobelets trayeurs (15), le faisceau trayeur étant supporté par un support (32), tandis qu'un moyen d'observation (35) monté sur le support (32) est prévu pour observer la position des trayons (17) du pis de l'animal, le dispositif étant pourvu en outre de moyens pour ajuster la position des gobelets trayeurs (15) sur la base de la position observée des trayons (17), caractérisé en ce que le moyen d'observation (35) est un moyen optique, en ce que le support (32) est monté à coulissement le long d'une tige de guidage (31), ladite tige de guidage (31), en condition de fonctionnement, étant dans une position sensiblement verticale dépassant le plancher de la stalle de traite (7), et, en condition de non-fonctionnement, ladite tige de guidage (31) - supportant ensemble avec le support (32) le faisceau trayeur et le moyen d'observation (35) - étant dans une position sensiblement horizontale en-dessous du plancher de la stalle de traite (7).

2. Dispositif selon la revendication 1, caractérisé en ce que la tige de guidage (31) - supportant ensemble avec le support (32) le faisceau trayeur et le moyen d'observation (35) - peut pivoter autour d'un axe (8) sensiblement horizontal de sa position verticale à sa position horizontale.

3. Dispositif selon la revendication 2, caractérisé en ce que la tige de guidage (31) est connectée à un volet apte à pivoter (6) formant une protection pour le faisceau trayeur et le moyen d'observation (35) à l'encontre des jambes arrières de l'animal.
